Europäisches Patentamt

European Patent Office

Office européen des brevets

(11) Veröffentlichungsnummer: **0 485 769 A2**

## EUROPÄISCHE PATENTANMELDUNG

(21) Anmeldenummer: **91118016.4**

(51) Int. Cl.⁵: **H02J 7/00**

(22) Anmeldetag: **23.10.91**

(30) Priorität: **15.11.90 DE 4036374**

(43) Veröffentlichungstag der Anmeldung:
**20.05.92 Patentblatt 92/21**

(84) Benannte Vertragsstaaten:
**AT BE CH DE DK ES FR GB GR IT LI LU NL SE**

(71) Anmelder: **BSG-Schalttechnik GmbH & Co. KG**
**Meisterstrasse 19**
**W-7460 Balingen 1(DE)**

(72) Erfinder: **Faude, Rudolf**
**Sonnenbergstrasse 57**
**W-7460 Balingen(DE)**
Erfinder: **Lohner, Martin**
**Blumenthalstrasse 16**
**W-7460 Balingen-Ostdorf(DE)**

(74) Vertreter: **Otte, Peter, Dipl.-Ing.**
**Tiroler Strasse 15**
**W-7250 Leonberg(DE)**

(54) **Ladeeinrichtung für wiederaufladbare Batterien.**

(57) Bei einer Ladeeinrichtung für wiederaufladbare Batterien oder Akkumulatoren wird vorgeschlagen, ein Lade-Grundgerät vorzusehen, welches die gesamte elektrische Ausrüstung einschließlich Transformatoren, Gleichrichter sowie Steuerschaltung enthält und in dieses Grundgerät Zusatz-Adapterwechseleinsätze von gleicher Außenform einzusetzen, die in verschiedenen inneren Ladeschacht-Ausführungsformen beliebigen zu ladenden Akkus angepaßt sind, derart, daß mit einem Grundgerät (Grundmodul) und entsprechenden zusätzlichen Wechseleinsätzen beliebige Arten von Akkumulatoren geladen werden können.

Fig.1

Adapter für jeweiligen Akkupack

Grundgerät

## Stand der Technik

Die Erfindung geht aus von einer Ladeeinrichtung nach dem Oberbegriff des Anspruchs 1.

Ladeeinrichtungen für wiederaufladbare Batterien oder Akkumulatoren sind in vielfältiger Form bekannt; sie dienen zur wiederholten Aufladung von entsprechend geeigeneten Akkus und umfassen ein breites Gerätespektrum, um beispielsweise so unterschiedliche Akkus wie schwere Fahrzeugbatterien bis hinunter zu kleinsten Knopfzellen wieder aufladen zu können.

Insbesondere in letzter Zeit werden Ladegeräte für Akkus in größerem Umfang eingesetzt, weil immer mehr batteriebetriebene Geräte Verwendung finden, nicht nur im häuslichen Bereich (wiederaufladbare Zahnbürsten, Taschenlampen u.dgl.), sondern auch im handwerklichen und industriellen Maßstab speziell auch für Elektrohandwerkzeuge, die ohne Netzanschluß zur Stromversorgung über einen Akkupack oder eine sonstige Ausrüstung verfügen, die sie netzunabhängig macht.

Solche Akkupacks, aber auch die heute schon vielfach im Gebrauch befindlichen Nickelkadmium-Akkus, die in den gängigen Batteriegrößen erhältlich sind, und die unter Umständen 1.000 oder mehr Ladezyklen überstehen können, sind nicht nur aus Umweltgründen gegenüber Batterien zu bevorzugen, sondern auch deshalb, weil sie inzwischen, etwa für den Motorantrieb, hohe Ströme über längere Zeiträume abgeben können.

Bisher ist es so, daß praktisch jedes im Haushalt, im Handwerk oder in der Industrie verwendete, seine Stromversorgung aus Akkumulatoren beziehende Gerät über ein eigenes, insofern dann auch speziell abgestimmtes Ladegerät verfügt, die nicht selten so ausgelegt sind, daß man stundenlange Wartezeiten in Kauf nehmen muß, um das jeweils zugeordnete Gerät wieder einsatzfähig zu machen.

Solche Ladegeräte verfügen üblicherweise über die gesamte, für ein einwandfreies Laden des oder der jeweils zugeordneten Akkus erforderliche Ausrüstung, also Transformatoren, Gleichrichterschaltungen, Steuersysteme, Temperatursensor zur Vermeidung einer Überhitzung des Akkus während des Ladevorgangs u.dgl. und sind nicht geeignet, auch für Akkupacks oder wiederaufladbare Batterien anderer Form, anderer Kapazität und dann üblicherweise auch mit anderen Anschlüssen eingesetzt zu werden. Dies führt nicht nur zu Umständlichkeiten beim Gebrauch der verschiedenen, von Akkus angetriebenen Geräten, sondern auch zu unnötigen Investitionen und einer umfassenden Lagerhaltung.

Zwar sind generell Ladegeräte bekannt, die gleichzeitig über mehrere, etwa durch Federspannung auch verstellbare Positioniermöglichkeiten für wiederaufladbare Batterien, insbesondere von der Größe üblicher Monozellen oder Babyzellen verfügen. Hierbei handelt es sich aber um nicht angepaßte Ladegeräte, die nur einen bestimmten geringen Ladestrom erzeugen können und auf den Zustand der Batterie keine Rücksicht nehmen, beispielsweise auch deren Temperatur nicht erfassen können.

Der Erfindung liegt die Aufgabe zugrunde, ein einheitliches, jedoch universell anwendbares Akkuladesystem in modularer Ausführung zu schaffen, mit dem sich wiederaufladbare Batterien beliebiger Form, Spannung und Kapazität, falls gewünscht auch in kürzester Zeit wieder laden lassen.

## Vorteile der Erfindung

Die Erfindung löst diese Aufgabe mit den kennzeichnenden Merkmalen des Hauptanspruchs und hat den Vorteil, daS es nunmehr möglich ist, unter Verwendung eines Grundgerätes eine Vielzahl von unterschiedlichen Akkus laden zu können, so daß ein Benutzer, der beispielsweise ein von Akkumulatoren versorgtes Arbeitsgerät in Verbindung mit einem Akkuladesystem nach vorliegender Erfindung oder unabhängig vom Gerät erwirbt, dann speziell dieses Akkuladesystem in beliebiger Weise erweitern kann, und zwar durch jeweils bestimmten Akkus, beliebiger Form, Größe und Kapazität angepaßten Zusätzen, die mit dem Grundmodul des Akkuladesystems verbunden werden.

Der Grundmodul enthält dabei als Grundgerät sämtliche für den eigentlichen elektrischen Ladevorgang erforderlichen Anordnungen und Schaltungen nur einmal, also Transformator, Gleichrichter, Steuerschaltung einschließlich auf Temperatursignale reagierender Bereich, so daß sich schon aus diesem Gesichtspunkt ein erheblicher Preisvorteil für den Benutzer ergibt, da man mit einem einzigen Grundmodul die gesamte Palette der vielfältigen Akkus und wiederaufladbaren Batterien versorgen kann.

Es versteht sich, daß der Grundmodul als Grundgerät dann eine entsprechend leistungsfähige Elektronik enthält, die zum Steuern, Regeln und Überwachen des jeweiligen Ladevorgangs benötigt wird. Das jeweilige Zusatz-Adapterteil, welches mit dem Grundmodul zu verbinden ist, ist dann wenig mehr als ein der entsprechenden, aufzunehmenden Form des wiederaufladbaren Akkus angepaßtes Formteil und enthält nur Kontakte, um einerseits den vom Grundmodul stammenden Ladestrom zum entsprechenden Akku weiterzuleiten und andererseits, falls gewünscht und erforderlich, entsprechende Aussagen über dessen jeweilige Temperatur zu machen.

Das jeweilige Zusatzadapterteil, welches in einen geeigneten, stets gleichen Aufnahmeschacht am Grundmodul oder am Grundgerät eingesetzt wird, gibt es also in beliebigen Ausführungsformen bezüglich des jeweils einzusetzenden und dann zu ladenden Akkus; dabei ist die äußere Form der jeweiligen Zusatzadapterteile untereinander identisch, so daß sie alle in den gleichen Aufnahmeschacht des Grundgeräts passen. Es ergibt sich hierdurch ein gefälliges Aussehen des Akkuladesystems, wobei sich jeweils lediglich die einzelnen Ladeschächte der Zusatzadapterteile untereinander unterscheiden.

Es liegt innerhalb der erfindungsgemäßen Bandbreite, den Aufnahmeschacht am Grundgerät selbst schon als Ladeschacht für einen dann beispielsweise größeren Akku auszubilden, so daß ein Zusatzadapterteil entbehrlich ist und die dann jeweils für die unterschiedlichen Akkuformen erforderlichen Zusatzadapterteile in ihrer Außenform so ausgelegt sind, daß sie der einen Akkuform entsprechen und in den Aufnahmeschacht, der in diesem Fall gleichzeitig ein Ladeschacht ist, eingesetzt werden können.

Es ist ferner auch vorteilhaft, das Grundgerät so auszulegen, daß ein erstes seitliches Teilgehäuse der Aufnahme der elektrischen und elektronischen Baukomponenten dient und mit diesem vollgepackt ist, also Trafo, Gleichrichter und Elektronik einschließlich Steuer- und Regelschaltung enthält, wobei auch entsprechende Kühlöffnungen vorgesehen sein können, und dann einen weiteren Gehäuseteil seitlich anschließend mit dem Aufnahmeschacht für die verschiedenen einzelnen Adaptereinsätze oder Wechseleinsätze zu versehen. Durch das Einführen eines jeweiligen Wechseleinsatzes in den Aufnahmeschacht des Grundgeräts werden zum Grundgerät hin entsprechende Kontakte berührt, die sich immer an der gleichen Stelle befinden, wobei von diesen Kontakten im jeweiligen Wechseleinsatz ausgehend zum Ladeschacht im Wechseleinsatz elektrische Verbindungsleitungen führen, die dann in ihrer Position, Form und Struktur den jeweils zu ladenden unterschiedlichen Akkus angepaßt sind.

Handelt es sich um Ladevorgänge bei kleineren Akkus oder wiederaufladbaren Batterien, so ist es auch möglich, einen Wechseleinsatz mit mehr als nur einem Ladeschacht auszurüsten, so daß gleichzeitig mindestens zwei Akkus geladen werden können, die dann vorzugsweise über gleiche Daten verfügen. Sinnvollerweise ist in diesem Fall die Ladeelektronik so ausgelegt, daß die beiden eingesetzten Akkus nacheinander geladen werden, so daß man nach Ablauf einer bestimmten Zeit, beispielsweise über Nacht, am nächsten Morgen dann beide Akkus frisch wieder aufgeladen entnehmen kann.

Dabei ist von Vorteil, daß die Steuerelektronik so ausgebildet ist, daß sie von selbst auf jeweilige elektrische Daten des zu ladenden Akkus reagiert; beispielsweise kann durch einen anfänglichen Stromimpuls zum zu ladenden Akku vom Steuergerät selbst festgestellt werden, über welche Kapazität und insbesondere über welche Nennspannung der Akku verfügt, so daß vom Grundgerät dann die entsprechenden Ladeströme bereitgestellt werden können.

Unter Benutzung der modernen Technologien bei der Daten- und Versorgungsspannungsübertragung lediglich über Zweidrahtleitungen ist es auch möglich, von der Steuerschaltung des Grundgeräts aus die verschiedenen Einsätze jeweils anzusprechen und in zeitlicher Abfolge in eingesetzten Zusatz-Adapterteilen oder Wechseleinsätzen sitzende Akkus zu laden oder dann, wenn es sich um gleichartige Akkus handelt, durch entsprechende Stromerhöhung auch gleichzeitig parallel den Ladevorgang für die angeschlossenen Akkus durchzuführen.

Durch die in den Unteransprüchen aufgeführten Maßnahmen sind vorteilhafte Weiterbildungen und Verbesserungen der Erfindung möglich. Besonders vorteilhaft ist die einheitliche Einbettung einer speziellen, elektrische Leitungsverbindungen darstellenden Stanzgitterform in jeden der unterschiedlichen Wechseleinsätze für den Aufnahmeschacht am Grundgerät, wobei die äußeren Kontakte des Wechseleinsatzes stets an der gleichen Stelle liegen, damit die ebenfalls an dieser Stelle sich befindlichen Kontakte im Aufnahmeschacht des Grundgeräts berührt werden können, während die Stanzgitter-Leitungen dann an die unterschiedlichsten Stellen geführt werden können im Inneren des jeweiligen Wechseleinsatzes bis zu den (jeweils unterschiedlichen) Stellen, an denen ein entsprechender, diesen Wechseleinsatz zugeordneter Akku bei Einschieben in den vom Wechseleinsatz gebildeten Ladeschacht seine Kontakte hat. Es ist in diesem Zusammenhang auch nicht erforderlich, aus der Stanzgitterform nicht benötigte elektrische Flachbandleitungen wegzubrechen; sie befinden sich dann ohnehin an solchen Stellen innerhalb des Ladeschachts, an welchem der für diesen Ladeschacht des jeweiligen Wechseleinsatzes vorgesehene Akku keine Kontaktmöglichkeiten aufweist. Man kann unter diesen Umständen aber dann immer mit der gleichen Stanzgitterform arbeiten.

Zeichnung

Ausführungsbeispiele der Erfindung sind in der Zeichnung dargestellt und werden in der nachfolgenden Beschreibung näher erläutert. Es zeigen:

Fig. 1 schematisiert in perspektivischer Darstellung ein Grundgerät mit Aufnahmeschacht für eine unbegrenzte Anzahl unterschiedlicher Zusatzadapterteile oder Wechseleinsätze, wobei die Unterschiedlichkeit sich in der jeweiligen, von diesen Wechseleinsätzen zur Verfügung gestellten Ladeschacht-Konfiguration manifestiert;

Fig. 2 schematisiert und im Bereich des Wechseleinsatzes besonders hervorgehoben die Möglichkeit, alle Wechseleinsätze mit einer identischen Stanzgitterform durch deren Umspritzung herzustellen, wobei unterschiedlichen zu ladenden Akkus Rechnung getragen werden kann und

Fig. 3 eine Variante der Erfindung, bestehend aus einer Grundgerät-Grundform mit Wechseleinsätzen und der weiteren Möglichkeit, zur ergänzenden Adaption an unterschiedliche Akkus seitlich noch Zusatz-Adapterteilgehäuse anzusetzen bei gleichzeitiger Herstellung der elektrischen Verbindungen, die ihrerseits wieder Aufnahmeschächte für Wechseleinsätze aufweisen und die

Fig. 4 und 5 eine detailgenaue Ausführungsform mit von hinten horizontal einführbarem Adapter-Wechseleinsatz.

Beschreibung der Ausführungsbeispiele

Der Grundgedanke vorliegender Erfindung besteht darin, ein umfassendes universelles Akkuladesystem mit einem Grundgerät und einer beliebigen Vielzahl von Adapterwechseleinsätzen zu schaffen, die in mehreren Ausführungen in das den elektrischen Bereich abdeckende Grundgerät eingesetzt werden können, wodurch sofort auch die erforderlichen elektrischen Anschlüsse zwischen dem Grundgerät einerseits und der beliebigen Anzahl der in das Grundgerät einsetzbaren Adapterwechseleinsätze hergestellt wird.

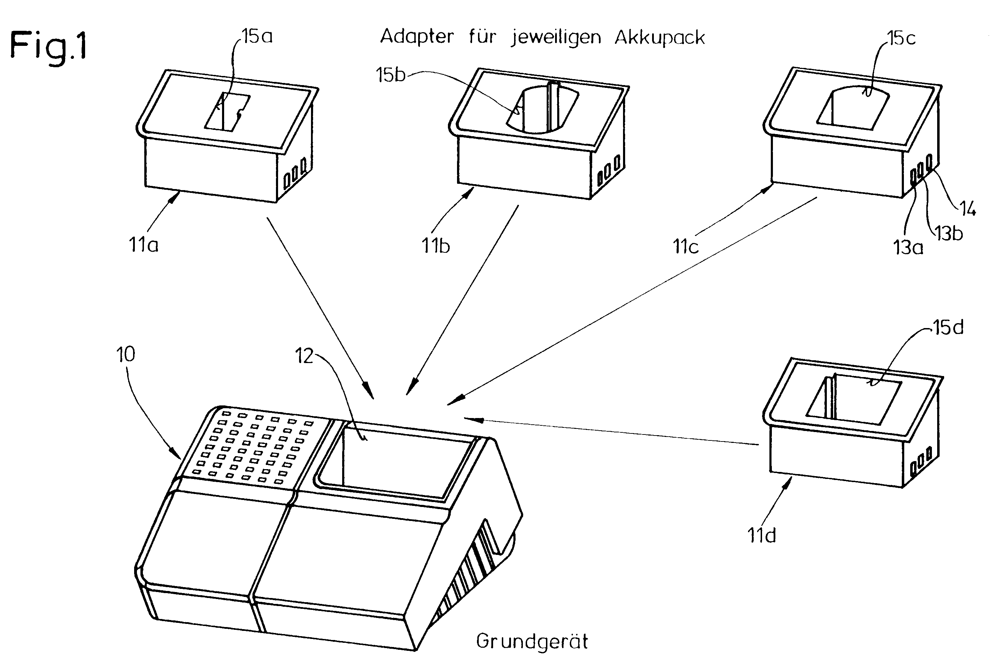

In Fig. 1 sind das Grundgerät mit 10 und die in ihrer Anzahl nicht beschränkten, untereinander lediglich mit Bezug auf ihren inneren Ladeschacht unterschiedlichen Adapterwechseleinsätze mit 11a, 11b, 11c und 11c ... bezeichnet. Die perspektivische Darstellung der Fig. 1 macht deutlich, daß das Grundgerät bevorzugt einen doppelgehäusigen Grundaufbau aufweist und auf der in der Zeichnung linken Seite den Elektronikbereich mit Steuerschaltung, Transformator, Gleichrichter u.dgl. beherbergt, während auf der rechten Seite im oberen Teil ein Aufnahmeschacht 12 gebildet ist, der bei jedem Grundgerät eine durchgehend einheitliche Form aufweist und in den die jeweiligen Adapterwechseleinsätze 11a, 11b, 11c, 11d ... mit ihren Außenabmaßen bündig hineinpassen, wobei durch dieses Einsetzen des jeweiligen Adapterwechseleinsatzes auch sofort die elektrischen Verbindungen zwischen dem Grundgerät und dem Wechseleinsatz hergestellt werden. Zu diesem Zweck weist der Wechseleinsatz, wie in Fig. 1 gezeigt, an vorgegebener Stelle vorzugsweise drei Kontakte auf, nämlich Kontakte 13a und 13b für Plus- und Minus-Leitungen sowie 14 für einen Temperatursensor. In entsprechender Weise sind die Gegenkontakte des Grundgeräts in dessen Aufnahmeschacht angeordnet, so daß beim Einschieben des jeweiligen Wechseleinsatzes automatisch die elektrische Verbindung hergestellt wird; es versteht sich, daß hier für die erwünschte Kontaktgabe Kontaktformen beliebiger Art, auch unter Federpreßdruck stehende Kontakte, verwendet werden können, um stets sicher durchzukontaktieren.

Da es problemlos möglich ist, die nur einmal vorhandene Elektronik mit Transformator und Gleichrichter so auszulegen, daß von der Elektronik die elektrischen Daten des jeweils zu ladenden Akkus (Nennspannung, Kapazität) erfaßt und der Ladevorgang entsprechend abgestimmt wird, ist es ein besonderer Vorteil vorliegender Erfindung, die Adapterwechseleinsätze in den verschiedensten Ausführungsformen mit Bezug auf ihre jeweiligen Ladeschächte und die in diesen zur Kontaktierung der jeweiligen Akkuanschlüsse angeordneten inneren Kontakte zur Verfügung zu stellen, so daß jede Art von Akkumulator oder wiederaufladbarer Batterie durch das erfindungsgemäße Akkuladesystem geladen werden kann. Hierdurch ergeben sich nicht nur entscheidende Preisvorteile dann, wenn man, was ohnehin kaum zu vermeiden ist, mit einer Vielzahl von unterschiedlichen Akkupacks bzw. wiederaufladbaren Batterien arbeitet, sondern es reduziert sich auch der Raumbedarf, da man nur einen einzigen Elektronikbaustein für die Steuerung, Regelung und die Überwachung des Ladevorgangs benötigt, der sich dann jeweils im Grundgerät befindet, während in den Adapterwechseleinsätzen bis auf die vorhandenen Kontakte und gegebenenfalls durchgeschleiften Anschlußleitungen keine Elektronik vorhanden ist und auch nicht zu sein braucht.

Ein Temperatursensor-Kontakt 14 ist jedenfalls bei bestimmten anspruchsvolleren Ladegeräten stets vorhanden, um auch den Temperaturzustand des jeweils zu ladenden Akkumulators zu erfassen. Üblicherweise weisen viele Akkupacks daher auch von Anfang an schon drei Kontaktanschlüsse auf, wovon einer zu einem Temperatursensor innerhalb des Akkupacks führt.

Alternativ ist es natürlich bei vorliegender Erfindung auch möglich, den jeweiligen Ladeschacht der Wechseleinsätze so auszubilden, daß bei keinen Temperatursensor aufweisenden Akkus, wiederaufladbaren Batterien oder Akkupacks die Temperatur des eingesetzten Akkus über einen ladeschachteigenen Temperatursensor erfaßt werden kann.

Sollen gleichzeitig mehr als nur ein Akku geladen werden, dann ist dies für kleinere Akkus problemlos möglich, wenn man einen Wechseleinsatz mit zwei oder mehr Ladeschächten ausstattet, wobei dann bevorzugt Akkus eingesetzt werden können, die über die gleichen Daten verfügen. In diesem Fall braucht die elektronische Steuerschaltung des Grundgeräts lediglich den Ladestrom zu erhöhen. Handelt es sich um Akkumulatoren unterschiedlicher Daten und/oder Fabrikate, dann kann auch eine zeitlich aufeinanderfolgende Ladung bei gleichzeitig eingesetzten Akkumulatoren in Betracht gezogen werden, wozu die Steuerelektronik die eingesetzten Akkus zeitlich aufeinanderfolgend bedient und den Bereich, der einen dann schon geladenen Akku enthält, von der weiteren Stromzufuhr abschaltet. Dies kann über gesonderte Steuerinformationen geschehen, die ebenfalls über die Zweidraht-Verbindungsleitung für den Ladestrom oder auch über die Temperatursensorleitung erfolgen kann - im jeweiligen Akku-Aufnahmebereich befindet sich dann noch, den Akkuanschlußkontakten zugeordnet ein auf die jeweilige Steuerinformation ansprechbares Schaltteil (Relais), oder es werden zu den jeweiligen eingesetzten Akkus separate elektrische Verbindungsleitungen vorgesehen und die Elektronik des Grundgeräts beaufschlagt dann die einzelnen Akkus durch Umschaltung aufeinanderfolgend. Da eine gemeinsame Masseleitung verwendet werden kann, bleibt auch bei einer solchen Ausgestaltung die Anzahl der Leitungsverbindungen gering.

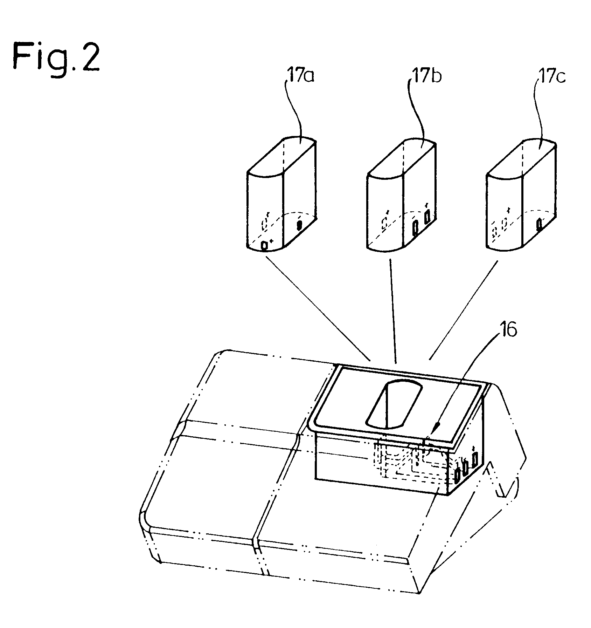

Die Fig. 2 verdeutlicht die weiter vorn schon angesprochene Möglichkeit, durch Einsatz einer universell verwendbaren, elektrische Leitungen, vorzugsweise in Form von schmalen Messingbändern, bildenden Stanzgitterform die jeweiligen Wechseleinsätze ohne größeren Aufwand für die verschiedensten unterschiedlichen Akkuarten und Akkupacksysteme kontaktierbar zu machen, indem die Stanzgitterform mit drei Leitungszweigen dort beginnt, wo die äußere Kontaktgabe über die Kontakte 13a, 13b und 14 zum Grundgerät erfolgt und sich dann in beliebiger Weise auffächert,ergänzt und umlenkt, um entsprechend den unterschiedlichsten Anforderungen der jeweiligen Ladeschächte 15a, 15b, 15c Kontakte zu den jeweils eingesetzten speziellen Akkus zu bilden.

In Fig. 2 ist die universell anwendbare Stanzgitterform mit 16 bezeichnet; man erkennt an den darüber angeordneten unterschiedlichen Akkus 17a, 17b, 17c, daß diese zwar in ihrer äußeren Form identisch sein können, jedoch ihre jeweiligen Plus- und Minus-Anschlüsse sowie den Temperaturanschluß an unterschiedlichen Stellen aufweisen - diesen Unterschieden trägt die universelle Stanzgitterform 16 Rechnung.

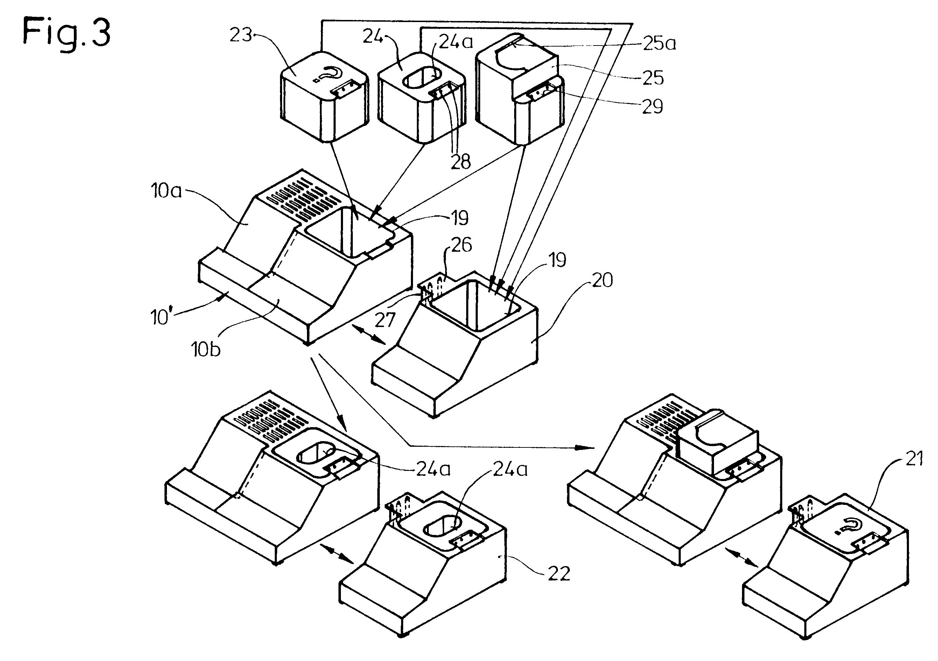

Die in Fig. 3 dargestellte Variante vorliegender Erfindung verdeutlicht zunächst deren universelle Anwendbarkeit und Ausführbarkeit; ein Grundgerät 10' umfaßt auf der in der Zeichnung linken Seite einen Gehäuseteilbereich 10a, der Trafo, Gleichrichter und elektronischen Schaltungsteil beherbergt sowie auf der rechten Seite einen Gehäuseteilbereich 10b mit Aufnahmeschachtöffnung 19. Es sind ergänzend jeweils seitlich an das Grundgerät Zusatz-Adapterteile 20, 21, 22 ... zweiter Art vorgesehen, die jeweils über Aufnahmeschächte ohne eigene Elektronik verfügen und die durch Steckverbindungen mit dem Grundgerät 10' verbindbar sind.

Dabei können die so zusätzlich gebildeten Aufnahmeschächte 19, wenn sie nicht von vornherein eine spezielle, einem gegebenen Akkumulator oder einer wiederaufladbaren Batterie angepaßte Innenkontur aufweisen, mit jeweils einem aus einer Vielzahl vorhandener Adapterwechseleinsätze versehen werden, die in Fig. 3 mit 23, 24, 25 bezeichnet sind.

Durch die Möglichkeit der Zusatz-Adapterteile zweiter Art erhöht sich die Möglichkeit, in Verbindung mit den Adapter-Wechseleinsätzen die Anzahl der gleichzeitig einer Ladung zuzuführenden Akkus zu erhöhen, wobei diese weiteren Zusatz-Adapterteile 20, 21, 22 mit dem Grundteil durch geeignete Steckverbindungen elektrisch verbunden werden können.

An jedem zusätzlichen Adapterteil ist ein vorspringender Steckkontaktrand 26 gebildet, an welchem nach unten weggehende Kontaktstifte 27 angeordnet sind, die in entsprechende, nach oben offene Steckbuchsen 28 am Grundgerät 10' eingreifen.

Die einzelnen Adapter-Wechseleinsätze 23, 24, 25 verfügen dann ihrerseits wieder über die eigentlichen Ladeschächte 24a, 25a. Auch bei diesem Ausführungsbeispiel enthalten die Zusatz-Adapterteile bzw. die Adapter-Wechseleinsätze lediglich Kontaktanschlüsse, mit einer Kontakt-Zwischenlösung, indem über die verschiedenen Kontaktanschlüsse die elektrische Verbindung zunächst vom Grundgerät zu einem jeweiligen Zusatz-Adapterteil und von diesem über ebenfalls entsprechend "genormte" Kontaktanschlüsse zum jeweiligen Ladeschacht-Adaptereinsatz geführt werden.

Eine weitere vorteilhafte Ausgestaltung der Erfindung liegt darin, einen Adapter-Wechseleinsatz mit nach außen geführten elektrischen, flexiblen Leitungen auszustatten, die in Klammern oder sonstigen geeigneten Kontaktiereinrichtungen enden. So wird es beispielsweise möglich, auch solche Akkus, z.B. Fahrzeugbatterien, zu laden, die von Ladeschächten nicht aufgenommen werden können oder sonstwie nicht passen.

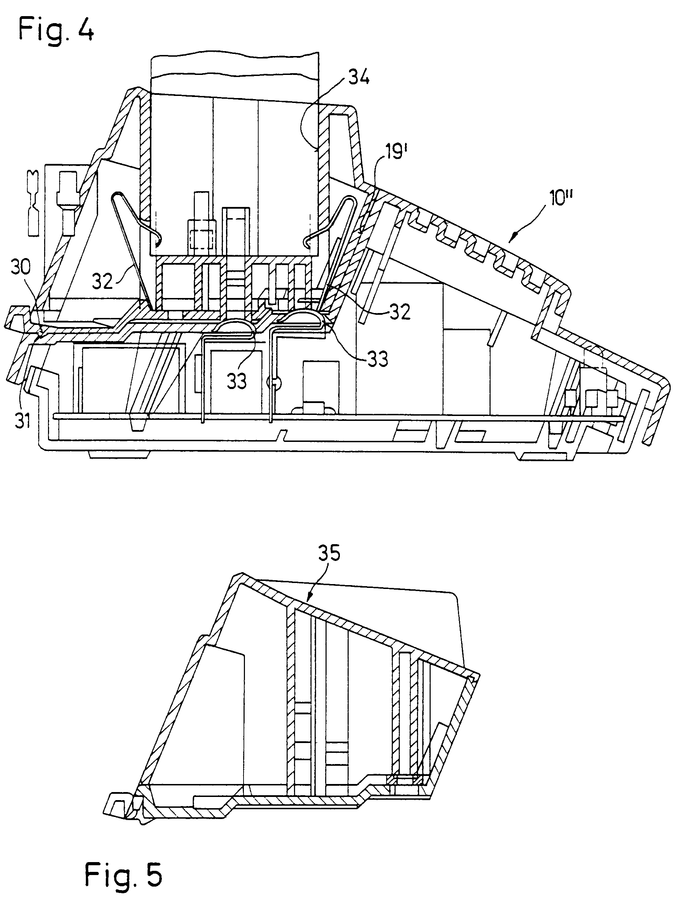

Es versteht sich, daß es auch möglich ist, anders als bisher beschrieben und dargestellt,die Adapter-Wechseleinsätze nicht von oben, sondern seitlich in den dann entsprechend ausgebildeten Aufnahmeschacht des Grundgeräts einzubringen, beispielsweise also, wie die Fig. 4 und 5 zeigen, von hinten, wobei dann die Rückwand des Grundgeräts zumindest im Aufnahmeschachtbereich entfällt. Hierdurch ergibt sich auch der Vorteil, daß durch einen längeren Einschiebeweg längs entsprechend gestalteter, sich gegenseitig berührender Kontakte ein Entlangschleifen der Kontakte aneinander und damit ein entsprechendes Reinigen derselben zur guten Kontaktgabe sichergestellt ist.

Die eine Ladeeinrichtung im größeren Detail zeigenden Darstellungen der Fig. 4 und 5 zeigen den Aufnahmeschacht 19' am Grundgerät 10'' zur horizontalen Einschiebung oder zum horizontalen Einbringen, wobei auch Verriegelungsmittel 30 vorgegeben sind, z.B. ein eine Ausnehmung bildender Rastschlitz 31 hinten am Grundgerät. Man erkennt ferner die in einen gegenseitigen stationären Berührungskontakt gelangenden elektrischen Kontaktverbindungen 32 und 33, einmal am Grundgerät 10'' und zum anderen an einem geeigneten Außenflächenbereich des jeweiligen Adapter-Wechseleinsatzes.

Dabei kann der Adapter-Wechseleinsatz 35 selbst auch über mehrere Ladeschächte 34 verfügen, die dann die gleichzeitige Aufnahme mehrerer wiederaufladbarer Batterien ermöglichen.

Sind für diesen letzteren Fall einer solchen Duo- oder Tandemlösung (bei beispielsweise zwei Ladeschächten an einem Adapter-Wechseleinsatz) dessen Abmessungen zu gering, so kann dieser beispielsweise seitlich über die Abmessungen, also die Grundkontur des Grundgeräts auch wegstehen, praktisch also eine seitliche Ausbeulung haben, die einen einstückigen Fortsatz mit dem, beispielsweise durch hinteres Einschieben mit dem Grundgerät verbundenen einen Adapter-Wechseleinsatz bildet. Dabei kann der durch die einstückige Ansatzform des Adapter-Wechseleinsatzes gewonnene zweite Ladeschacht auch selbst wieder, beispielsweise durch Entnahme eines Ladeschachteinsatzes, als genereller Aufnahmeschacht ausgebildet sein, so daß der Einsatz unterschiedlicher Ladeschächte zur Aufnahme unterschiedlicher Batterieabmessungen möglich ist.

## Patentansprüche

1. Ladeeinrichtung für Akkus und wiederaufladbare Batterien, z.B. für die elektrische Stromversorgung von Elektro(hand)geräten ohne Netzanschluß od.dergl., gekennzeichnet durch
   a) ein die elektrische Ausrüstung einschließlich Transformator, Gleichrichter und Steuerschaltung enthaltenden Grundgerät (10, 10'), welches einen einheitlichen Aufnahmeschacht (12, 19) mit elektrischen Kontaktanschlüssen aufweist und durch
   b) mit dem Grundgerät durch Einschieben in den Aufnahmeschacht verbindbare Adapter-Wechseleinsätze (11a, 11b, 11c, 11d; 23, 24, 25) , deren Außenform jeweils untereinander und mit der Innenkontur des Aufnahmeschachts (12, 19) am Grundgerät (10, 10') identisch ist und die ihrerseits unterschiedlichen, zu ladenden Akkus angepaßte Ladeschächte (15a, 15b, 15c, 15d; 24a, 25a) aufweisen,
   wobei durch das Einsetzen der Adapter-Wechseleinsätze gleichzeitig die für den jeweiligen Ladevorgang benötigten elektrischen Anschlüsse zum Grundgerät (10, 10') hergestellt sind.

2. Ladeeinrichtung nach Anspruch 1, dadurch gekennzeichnet, daß das Grundgerät einen doppelhäusigen Aufbau umfaßt mit einem auf einer Seite angeordneten, geschlossenen, die elektrischen Komponenten einschließlich Steuerschaltung, Trafo und Gleichrichter aufnehmendem ersten Gehäuseteil und einem weiteren, die Aufnahmeschachtöffnung (12, 19) aufweisendem zweiten Gehäuseteil.

3. Ladeeinrichtung nach Anspruch 1 oder 2, dadurch gekennzeichnet, daß an aneinandergrenzenden Flächen des Grundgerät-Aufnahmeschachts (12, 19) und der jeweiligen, darauf ausgerichteten Wandteile der Adapter-Wechseleinsätze Kontakte angeordnet sind, die beim vollständigen Einschieben des Wechseleinsatzes in den Aufnahmeschacht durchkontaktieren.

4. Ladeeinrichtung nach einem der Ansprüche 1 bis 3, dadurch gekennzeichnet, daß zusätzlich zu den beiden der Ladung eines jeweiligen Akkus dienenden elektrischen Kontaktverbindungen (13a, 13b) eine Temperatursensor-Kontaktverbindung (14) vorgesehen ist.

5. Ladeeinrichtung nach einem der Ansprüche 1 bis 4, dadurch gekennzeichnet, daß der Aufnahmeschacht (12, 19) des Grundgeräts (10, 10') als Ladeschachtöffnung für eine erste Akkuart ausgebildet ist.

6. Ladeeinrichtung nach einem der Ansprüche 1 bis 5, dadurch gekennzeichnet, daß eine Aufnahme- oder Ladeschachtabdeckung vorgesehen ist.

7. Ladeeinrichtung nach Anspruch 6, dadurch gekennzeichnet, daß die Aufnahme- oder Ladeschachtabdeckung sich bei Entnahme eines jeweiligen Akkus bzw. eines Adapter-Wechseleinsatzes automatisch schließt.

8. Ladeeinrichtung nach Anspruch 6 oder 7, dadurch gekennzeichnet, daß die Aufnahme- oder Ladeschachtabdeckung gegen Federdruck nach innen in einen zusätzlichen, die jeweils angepaßte Innenkontur erweiternden Abteilbereich abkippbar ist.

9. Ladeeinrichtung nach einem der Ansprüche 1 bis 8, dadurch gekennzeichnet, daß zur Herstellung der elektrischen Kontakt- und Leitungsverbindungen zwischen den Aufnahmeschacht-Außenkontakten und den jeweiligen Akkuanschluß-Kontakten innerhalb der Adapter-Wechseleinsätze eine Stanzgitterform (16) aus elektrischen Leitungsbahnen vorgesehen ist, die von einer vorgegebenen Eingangsposition der Kontakte zum Aufnahmeschacht hin eine Vielzahl von verschiedenen Leitungswegen innerhalb des jeweiligen Wechseleinsatzes zur vereinfachten Anpassung an die unterschiedlichen Kontaktstellen-Positionen der jeweils zu ladenden, unterschiedlichen Akkus aufweist.

10. Ladeeinrichtung nach einem der Ansprüche 1 bis 9, dadurch gekennzeichnet, daß die im Grundgerät (10, 10') enthaltende elektrische Ladeschaltung mit den einzelnen Zusatz-Adapterwechseleinsätzen durch jeweils getrennte Leitungen verbunden ist.

11. Ladeeinrichtung nach einem der Ansprüche 1 bis 10, dadurch gekennzeichnet, daß zur zeitlich aufeinanderfolgenden Ladung von gleichzeitig eingesetzten unterschiedlichen Akkus durch ein Grundgerät (10, 10') am Grundgerät Steuermittel vorgesehen sind, die direkt oder durch Ansteuerung von Umschaltern im eingesetzten Wechseleinsatz geladene Akkus von der weiteren Stromversorgung abschalten.

12. Ladeeinrichtung nach einem der Ansprüche 1 bis 11, dadurch gekennzeichnet, daß an das Grundgerät (10') ansetzbare Zusatz-Adaptergehäuseteile (20, 21, 22) Aufnahmeschächte (19) für Ladeschacht-Adapterwechseleinsätze (23, 24, 25) bilden.

13. Ladeeinrichtung nach einem der Ansprüche 1 bis 12, dadurch gekennzeichnet, daß die von einem Adapter-Wechseleinsatz gebildeten Akku-Kontakte in Form von elektrischen, flexiblen, aus dem Wechseleinsatz herausgeführten Leitungen gebildet sind mit Kontaktmitteln (Klammern) am Leitungsende.

14. Ladeeinrichtung nach einem der Ansprüche 1 bis 12, dadurch gekennzeichnet, daß Adapter-Wechseleinsätze durch Weglassen seitlicher Wandbereiche des Aufnahmeschachts (19') am Grundgerät (10'') seitlich durch eine im wesentlichen horizontal verlaufende Schiebebewegung in das Grundgerät einbringbar sind.

15. Ladeeinrichtung nach Anspruch 14, dadurch gekennzeichnet, daß bei Wegfall einer Aufnahmeschacht-Rückwand am Grundgerät (10'') der Adapter-Wechseleinsatz (35) von hinten in das Grundgerät einführbar ist.

16. Ladeeinrichtung nach einem der Ansprüche 1 bis 15, dadurch gekennzeichnet, daß die in den oder die Aufnahmeschächte am Grundgerät einschiebbaren Adapter-Wechseleinsätze selbst mehrere, gegebenenfalls unterschiedliche Ladeschächte aufweisen.

17. Ladeeinrichtung nach Anspruch 16, dadurch gekennzeichnet, daß ein zweiter oder weitere Ladeschächte am mit dem Grundgerät verbundenen Adapter-Wechseleinsatz über die Grundkontur des Grundgeräts bei einstückiger Verbindung mit dem Adapter-Wechseleinsatz (seitlich) hinausragen.

# Fig.1

Adapter für jeweiligen Akkupack

15a
11a
15b
11b
15c
14
13a
13b
11c
15d
11d
10
12
Grundgerät

Fig.2

# Fig.3

EP 0 485 769 A2

Fig. 4

Fig. 5